# EUROPEAN PATENT SPECIFICATION

(11) **EP 1 061 819 B1**
(45) Date of publication and mention of the grant of the patent: **14.08.2002**
(21) Application number: 99907733.2
(22) Date of filing: 08.03.1999
(51) Int. Cl.: A23N 15/08

(54) **ALIGNMENT DEVICE AND MACHINE INCORPORATING SUCH DEVICES**
AUSRICHTUNGSEINRICHTUNG UND MASCHINE MIT SOLCHEN EINRICHTUNGEN
DISPOSITIF DE CENTRAGE ET MACHINE EQUIPEE DE TELS DISPOSITIFS

(30) Priority: 07.03.1998 GB 9804833
(43) Date of publication of application: 27.12.2000
(73) Proprietor: Rose, David, Boston, Lincolnshire PE20 3JU (GB)
(72) Inventor: Rose, David, Boston, Lincolnshire PE20 3JU (GB)
(74) Representative: Loven, Keith James
(86) International application number: GB9900691
(87) International publication number: WO9944445

(56) References cited:
- WO-A-89/07400
- US-A- 3 678 976
- US-A- 4 258 618
- US-A- 4 718 334
- US-A- 4 730 554
- US-A- 5 410 955

## Description

### Field of the Invention

This invention relates to a device for positioning an object at least an end portion of which is generally bulbous, such as vegetables and fruit.

### Background to the Invention

It is often necessary to trim or slice onions and other similarly-shaped fruits and vegetables in the preparation thereof. To enable trimming to rake place, it will usually be necessary to align fruits and vegetables in a particular orientation. For example, in one process onions have their tops and tails trimmed off. This used to be done by hand using a knife, but is now done by a machine in which onions are passed along a conveyer towards two spaced-apart blades. As the onions pass through the spaced-apart blades their tops and tails are removed. Many machines used presently require operators to place onions on the conveyor in the correct orientation manually. The use of labour increases costs, and does not guarantee that 100 percent of the onions will be properly aligned.

WO 89/07400 describes a method of cutting the top and root ends off onions, the method including a step to align the axis extending between the top and root ends of the onion into a desired plane. An apparatus for performing the method is also described.

US 4730554 describes a device for aligning onions, the device comprising a cylinder having a helical groove in the outer surface thereof, and a roller provided next to the cylinder and a drive means to drive the cylinder, both the width of the groove and the minimum distance between the cylinder and the roller being less than the diameter and axial length of the onions to be aligned.

US 4258618 describes a device where onions are transferred onto a conveyor and made to roll along a belt conveyor in the opposite direction so that the axis extending between the top and root ends of the onion are transverse to the line of movement of the conveyor.

It would be desirable to provide a device capable of aligning substantially spherical objects, such as onions, radishes, brussel sprouts, and which does not suffer from the disadvantages suffered by the devices described in the above-mentioned patent applications.

It would also be desirable to provide a machine for preparing vegetables and fruits comprising an aligning device according to the invention.

### Summary of the Invention

According to the invention, there is provided a device for positioning an object at least an end portion of which is generally bulbous with a longitudinal axis of the object passing therethrough, the device comprising a plurality of fingers each rotatably mounted on a respective pivot, the pivots being located on and spaced around a common circular or annular support so that the fingers are directed inwardly of the support, and means for rotating the fingers in synchrony between an open position wherein the circle defined by the ends of the fingers is of a maximum diameter and a closed position wherein said cirde is of a minimum diameter, whereby during movement of the fingers between the open and closed position the fingers act on the bulbous portion of the object to align the axis into a desired plane.

The device may comprise a support member surrounded by the fingers such that an object supported by the support member can be aligned by the fingers. Preferably the fingers are mounted so as to be rotatable in a common place, which may be horizontal, but which could also be at another orientation, for example vertical. The support member may be concave. The support member may comprise a plate. The plate may be countersunk to provide concavity. The angle of the countersunk faces to the central axis of the support member is preferably in the range 70 to 89 degrees, and more preferably 80 to 89 degrees. The support member may be formed from stainless steel, plastics or another suitable material.

Advantageously, the device may further comprise a keeper to hold the object against the support member during rotation of the fingers, for example exerting a downward pressure on the object supported by the support member and/or the fingers. The keeper may be concave or flat. Advantageously, the keeper may be movable between a first position in which it rests on the object, and a second position in which an object can be placed into the device. Means to move the keeper between the first and second positions may be provided. The said means may comprise an actuator, which may be pneumatically, hydraulically or electrically operated. The keeper may be biased into the first position by means of a spring and/or its own weight. The keeper is particularly useful for aligning onions, but may not be required when aligning other objects, such as brussel sprouts.

The free end of each finger of the iris is preferably curved. The free end of each finger is preferably chamfered, and preferably the angle of the chamfer to an axis extending in the longitudinal direction of the finger is in the range 35 to 55 degrees, and more preferably is 45 degrees. The fingers may be formed from stainless steel, plastics or another suitable material.

The device may comprise inner and outer members arranged to permit relative rotation therebetween to enable the fingers to move between the open and closed positions, the fingers being pivotally mounted on one of the said members. The closed position may be reached when the region circumscribed by the free ends of the fingers is a minimum. Alternatively, the closed position may be reached by rotating one of the inner or outer members relative to the other until the space circumscribed by the free ends of the fingers is a minimum, and continuing the said rotation so that the device starts to open again. The device can then act as a cup for the aligned object.

Advantageously, the device is arranged so that in the closed position the fingers thereof are offset from the centre-lines of the device.

According to one aspect of the invention, the device is provided with a second alignment means for aligning the said axis into a second desired plane. The second alignment means may comprise a pair of spaced apart levers, the said levers being arranged to converge, means to support the object, and means to move the object through the said second alignment means, wherein movement of the object through the second alignment means aligns the said axis into the desired plane.

Preferably, the levers are arranged to pivot, the levers being urged together at one end. The levers may be urged together by spring means, which may be a tension spring.

The means to support the object may be mounted on the means to move the object, and may comprise a first alignment means. The means to move the object may comprise a conveyor belt, or a linear table.

The second alignment means may alternatively comprise, for use with bulbous articles which have a projecting point such as a root or a stem, a pair of probes movable transversely of the direction of movement of the first alignment means to engage the object and having means on the probes for engaging the projecting point and rotating the object as the probes move so that the point of the object is directed generally transversely of the direction of movement of the first alignment means.

Preferably, the second alignment means is mounted on a carriage movable parallel to the conveyor so as to keep pace, during operation thereof, with the object as it is carried by the first alignment means.

In one embodiment of the invention, there is provided a machine comprising a conveyor belt having a plurality of first alignment means mounted thereon, the machine further comprising a plurality of retaining members movably mounted above the conveyor belt, and drive means to move the said retaining members.

The retaining members may be mounted on a conveyor belt, or a tool bar arranged to move back and forth. The tool bar may be arranged to move up and down. Alternatively, the tool bar may be arranged to move back and forth in one plane, the retaining members being arranged to move up and down independently.

A synchronisation means may be provided to move the tool bar backwards and forwards according to a desired sequence. The synchronisation means may comprise at least one cam. The cam may be rotated by a belt driven by the conveyor belt mounting the first alignment means.

Where the retaining members are mounted on a conveyor, the conveyor may be driven by the conveyor belt mounting the first alignment means.

The machine may further comprise a feeding means for feeding objects onto the first alignment means. The feeding means may be mounted above the conveyor, and may comprise a tube. The feeding means may comprise an indexing means, which may be mounted within the said tube.

The machine may further comprise means to process the said object, for example trimming and/or slicing knives, a peeler, a pick-up means to pick up the object The pick up means may be rotatable, and may comprise a suction member. This is particularly useful for substantially spherical objects such as brussel sprouts or onions. This aspect is desirable because where the objects have only one protrusion, in the form of a butt, at one end such as Brussels sprouts, after the object has been aligned in two desired planes, it can then be picked up and if necessary rotated through 180 degrees so that the butt faces in a desired direction.

Generally, so that a machine can pick up the object and the object then be processed, it is necessary to align the said axis in two desired planes. This can be done for example by aligning the said axis of the object first so that it is substantially horizontal, and then rotating the object whilst maintaining the said axis so that it is aligned in the first plane, until the axis is aligned in the second desired plane, for example parallel with the centre line of the conveyor belt mounting the first aligning means of the invention.

The device of the invention provides for this and thereby eliminates much costly labour. The device is particularly useful for aligning products such as onions, shallots, radishes, and brussel sprouts, where the unit weight and physical size of the product is small and the labour cost of processing the large number of units is therefore high.

The device can also be used for aligning other articles which have only one end of a generally spherical form, for example leeks, although it will be appreciated that non-vegetable articles can also be aligned by the device of the invention. In the case of articles such as leeks, the horizontally extending alignment means or chuck can only cut one end of the article, and so the apparatus will be provided with only one such chuck, with other means being provided to ensure that the bulbous end is presented to the horizontally extending chuck.

### Brief Description of the Drawings

In the drawings, which illustrate exemplary embodiments of the device according to the invention:
Figure 1 is a plan view of a device according the invention;
Figure 2 is a partial cross-section of the device shown in Figure 1;
Figure 3 is a plan view of the device shown in Figure 1 illustrating the open and closed positions;
Figure 4 is a schematic representation of components of the device shown in Figures 1 to 3;
Figure 5 is a side view of a second alignment component;
Figure 6 is a plan view of the alignment component shown in Figure 5;
Figure 7 is a plan view of the alignment component shown in Figures 1 to 6 showing the operation of the component;
Figure 8 is a plan view of the alignment chuck and the alignment component showing their operation;
Figure 9 is an end elevation of an alignment device according to another embodiment of the invention, in the closed position;
Figure 10 is a view corresponding to that of Figure 9, but showing the device in the open position;
Figure 11 is an enlarged side sectional view of the device of Figures 9 and 10;
Figure 12 is a side view of a machine for preparing vegetables or fruits in accordance with one embodiment of the invention;
Figure 13 is a view corresponding to that of Figure 12, but with conveyors advanced slightly;
Figure 14 is an enlarged side view of a portion of the machine as illustrated by Figure 13, showing the relationship between the two different alignment devices and a cutting tool;
Figure 15 is an end view of the machine of Figures 12, 13 and 14;
Figures 16 to 19 are top plan view of a second alignment means according to an alternative embodiment, showing the successive stages in its operation;
Figure 20 is an enlarged perspective view of a part of the probes of the second alignment means shown in Figures 16 to 19;
Figure 21 is a sectional view on line A-A of Figure 20, showing the relationship with the supported object to be aligned; and
Figure 22 is a view corresponding to that of Figure 21, but modified to shown a screw for adjusting the position of the bar which engages the object.

### Detailed Description of the Preferred Embodiments

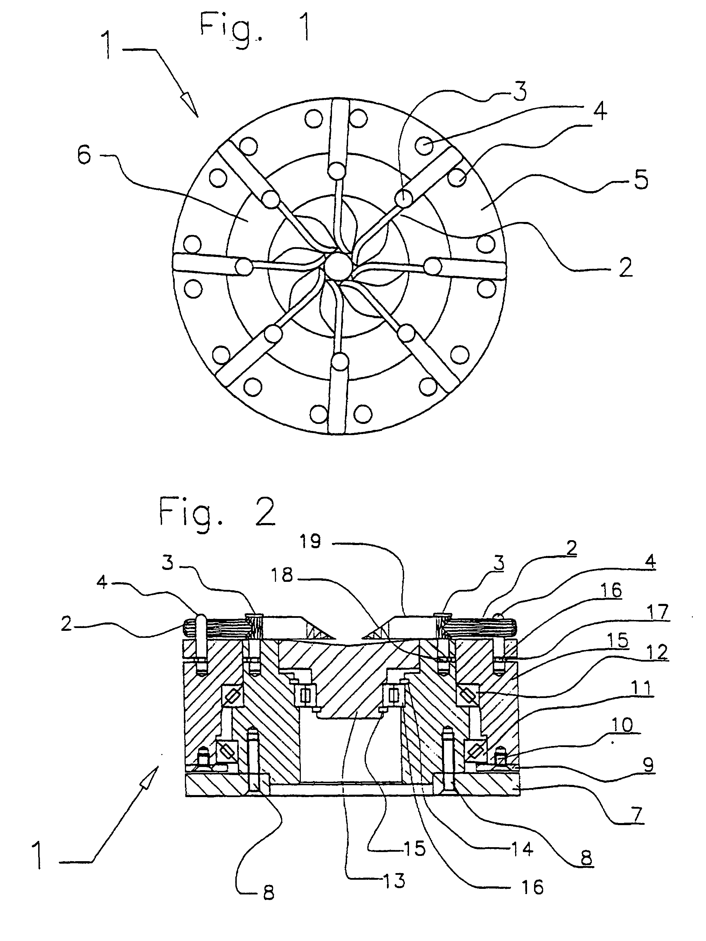

A first alignment means in the form of an alignment chuck 1 is shown in detail in Figures 1 and 2. The chuck 1 comprises an outer annular member 5 and an inner annular member 6. The inner annular member 6 is fixed to a base plate 7 by bolts 8. The outer annular member 5 is mounted so that it can rotate relative to the inner annular member 6. Bearings 11 and 12 provide for this rotation, the lower bearings 11 being held in place by a plate 9 which is attached to the lower side of the outer annular member 5 by bolts 9.

Fingers 2 are pivotally mounted on pins 3, each pin passing through a respective one of the fingers 2 and into the inner annular member 6. It can be seen that the lower portion of each pin 3 is provided with a groove 18 in which a key 19 can locate to secure the pin 3 in place. For each finger 2 pivotally mounted on the inner annular member 6, there is mounted a pair of stops 4 on the outer annular member 5. The stops 4 limit the degree to which the fingers 2 can move. Each stop 4 is provided with a groove 16 into which a key 17 can be inserted to lock the pin in place in the outer annular member 5.

Mounted inside the inner annular member 6 is a centre plate 13. It can be seen the upper surface 20 of the plate is concave, the surface sloping to the centre. The angle of slope is in the range 1 to 5 degrees to the horizontal. The centre plate 13 serves to support the onion (or similar) placed in the chuck for centring. Due to the upper surface 20 being concave, an onion (or similar) placed thereon tends to roll to the centre.

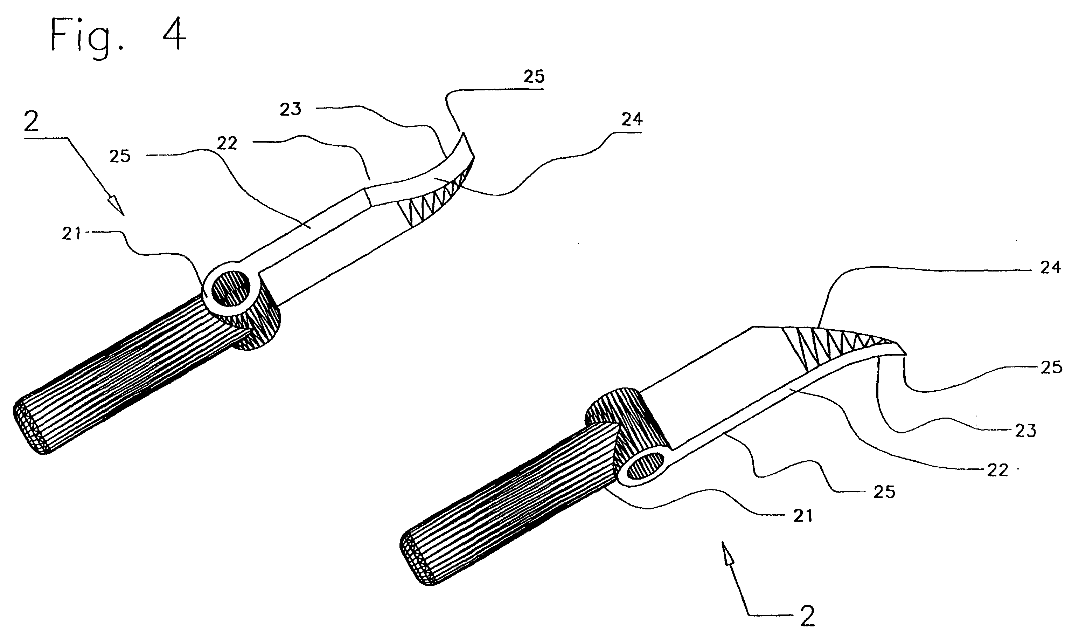

The shape of the fingers will now be described in greater detail with reference to Figure 4. Each finger 2 has an annular portion 25 through which the pin 3 may be inserted. Extending from one side of the annular portion 25 is a rod 21 which engages with and slides between the stops 4 in operation. Extending from the other side of the annular portion 25 is an aligning portion 22. The free end of the aligning portion 22 has a sloping surface 24, and is curved 23, the combination of the curve 23 and the slope 24 providing a point 25.

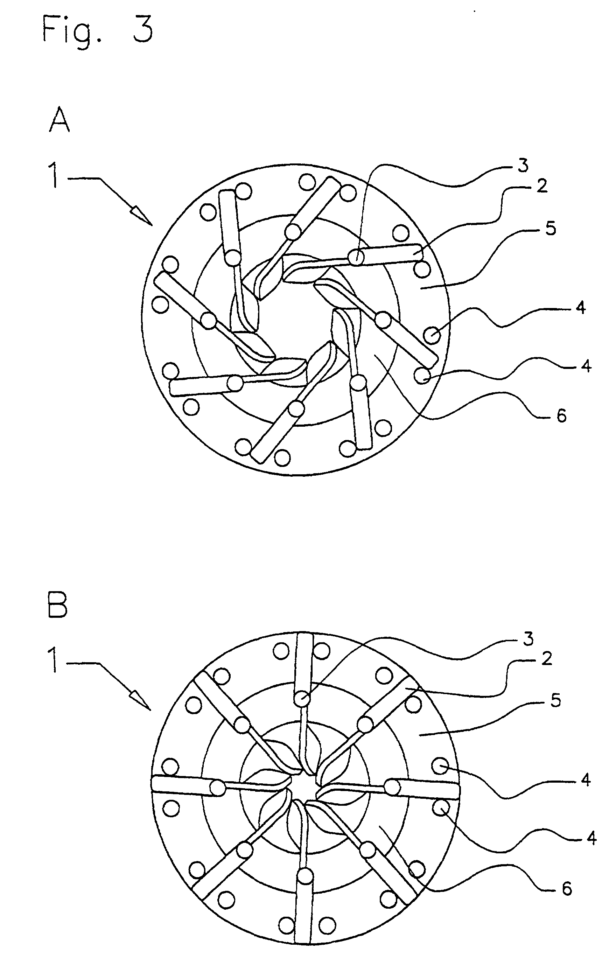

The effect of relative rotation between the outer annular member 5 and the inner annular member 6 is shown in Figure 3. It can be seen that the chuck operates as an iris. In the position marked "A", the iris is open, with the ends of the fingers being located towards the inside wall of the inner annular member 6. By rotating the inner annular member 6 in a clockwise direction relative to the outer annular member 5 the stops 4 cause the fingers 2 to pivot about the pins 3 so that the ends of the fingers move towards the centre of the inner annular member 6 to close the iris.

The alignment chuck 1 permits an onion (or similar) to be aligned so that the axis passing through the top and the tail of the onion is substantially horizontal. This is due to the action of the aligning portions 22 of the fingers 2. As the aligning portions 22 of the fingers 2 move inwards, they engage the onion (or similar) resting on the centre plate 13. The curvature and slant of the ends of the aligning portions 22 tend to lift and rotate the onion (or similar). An onion which rests on the centre plate 13 will never rest on its top or its tail. If the onion lands on the centre plate 13 on its top or its tail the onion will topple onto its side. As the fingers 2 move inwards, the points 25 of the fingers 2 engage the onion, and as the fingers 2 move further inwards the curved portion 23 and the sloping surface 24 lift and rotate the onion until the axis passing through the top and the tail of the onion is substantially horizontal. The inward movement of aligning portions 22 also causes the onion to be centralised.

It can be seen that in the closed position shown in position B the fingers are not parallel with the centre lines of the alignment chuck.

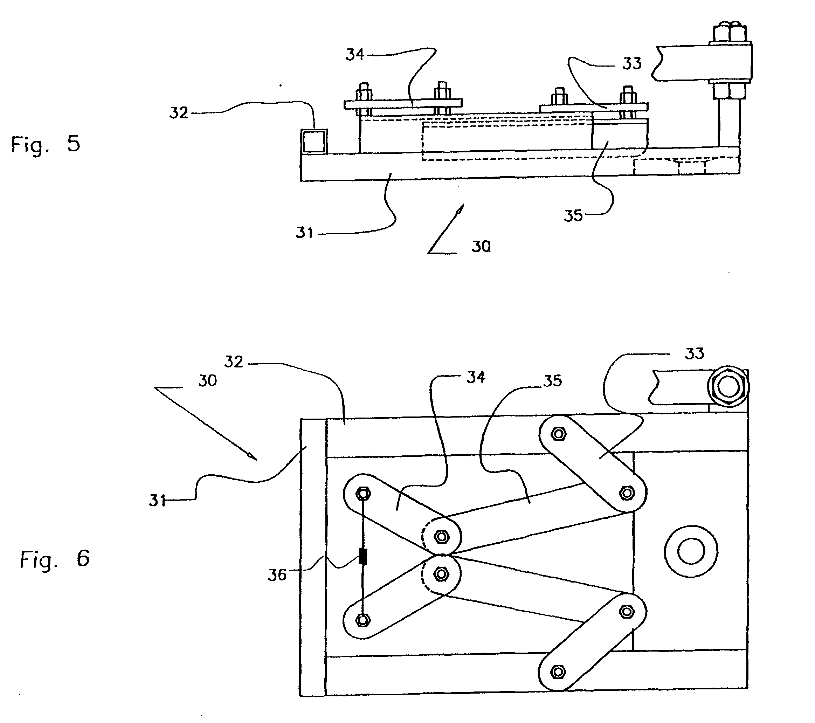

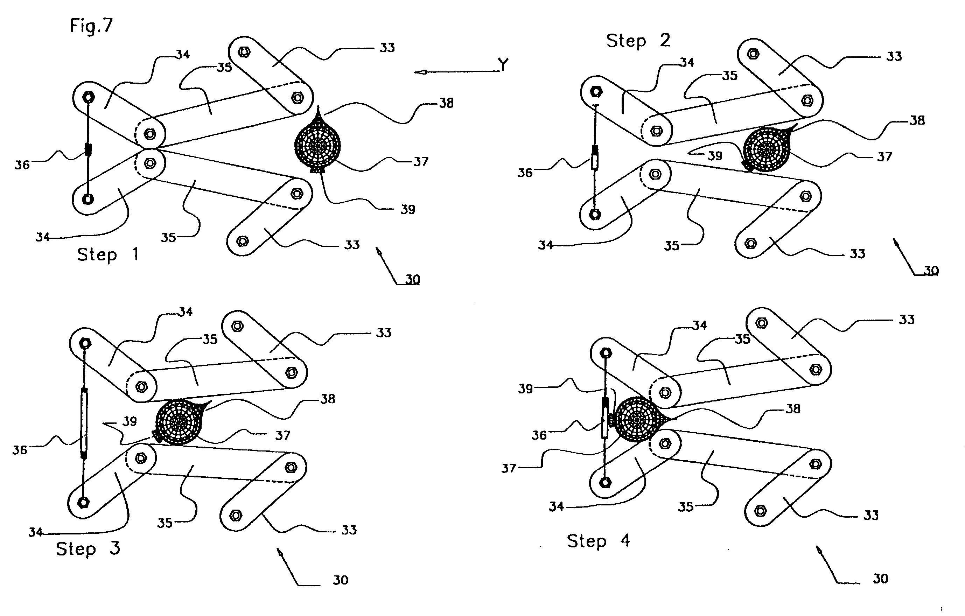

Referring now to Figures 5 and 6 there is shown a secondary alignment means 30 having pair of alignment members, each alignment member comprising levers 33, 34, and 35. One end of each lever 33 is fixed to an elongate support member 31 by means of a nut and bolt. The other end of each lever 33 has a lever 35 pivotally attached thereto. The lever 35 comprises a downwardly extending portion, the purpose of which will be described with reference to Figure 7. A lever 34 is fixed to the other end of the lever 35, the free ends of the two levers 34 being connected together by a spring 36 which pulls the two alignment members together.

The elongate members may be attached to the frame of a conveyor passing below the secondary alignment means 30.

Referring now to Figure 7, the operation of the secondary alignment means 30 is shown in four steps. An onion 37 is carried in the direction indicated by the arrow Y by a conveyor (not shown). Step 1 shows the secondary alignment means as the onion 37 is about to enter into it. It can be seen that the root end 38 of the onion protrudes further from the centre line X than does the shoot end 39. As such the root end 38 will engage with the downwardly extending portion of the right hand lever 35, before the shoot end 39 engages with the downwardly extending portion of the left hand lever 35.. In Step 2, the onion 37 has entered the secondary alignment means 30 and due to the engagement of the root end 38 of the onion 37 with the downwardly extending portion of the lever 35, and the movement of the conveyor in the direction Y, the onion 37 has been caused to rotate about its vertical axis. As the conveyor continues to move the onion 37 in the direction Y, the levers 35 are caused to move outwardly against the force of the spring 36, to the position shown in Step 3. The conveyor continues to move the onion 37 in the direction Y until the onion 37 reaches the position shown in Step 4. As the onion passes between the ends of the levers 35, the spring 36 pulls the alignment members together, which causes the end of the right hand lever 35 to engage with the root 38 of the onion and rotate it about its vertical axis.

The alignment chuck 1 and the secondary alignment means 30 together ensure that the axis passing through the top and the tail of the onion is always substantially horizontal and parallel with the centre line of the conveyor on which the onion is carried. A cutter can then be used to remove the top and the tail of the onion 37.

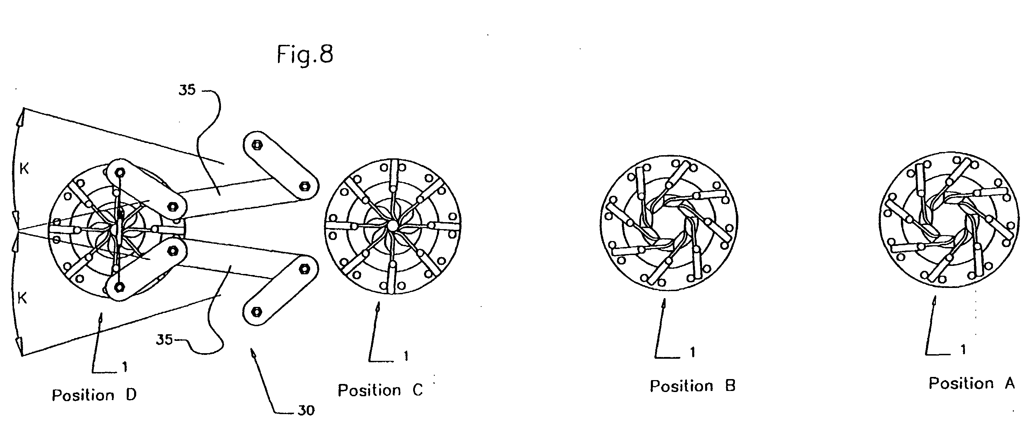

In Figure 8, a sequence of operation is shown, the alignment chuck 1 and the secondary alignment means 30 being mounted on a conveyor (not shown). The alignment chuck 1 is illustrated in four different positions. An onion may be placed on the chuck 1 when it is in position A. As the alignment chuck 1 moves past position B the outer annular member is caused to rotate relative to the inner annular member, so that when the chuck 1 reaches position C the fingers thereof have moved towards the centre of the chuck and the onion is aligned with the axis between its top and tail substantially horizontal. Between position C and position D, the onion passes through the secondary alignment means 30 so that at position D the onion is also aligned so that the axis between its top and tail is parallel to the centre line of the conveyor on which the alignment chuck 1 and the secondary alignment means 30 are mounted. As the onion passes through the secondary alignment means 30, the levers 35 swing through the arc K. It should be noted that the alignment chuck 1 is mounted on a moving part of the conveyor, whereas the secondary alignment means 30 is mounted on a stationary part of the conveyor.

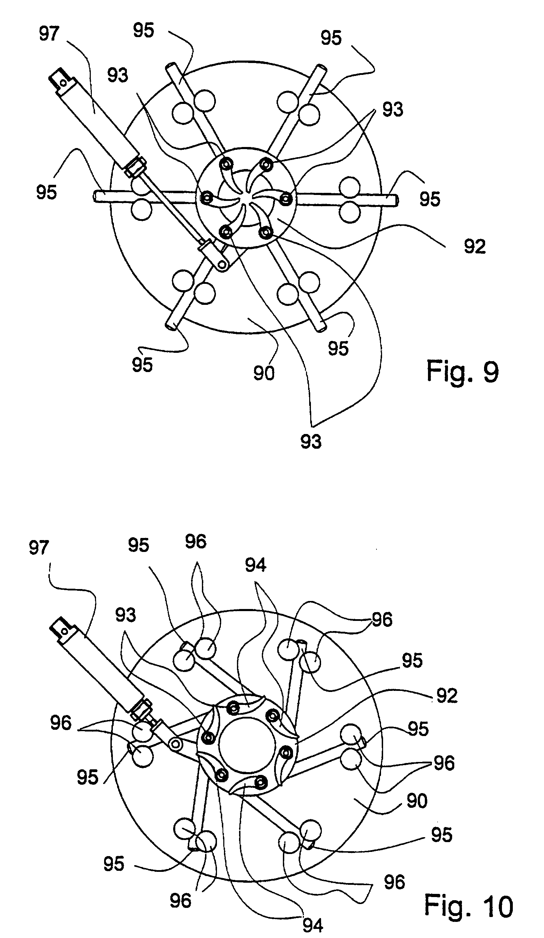

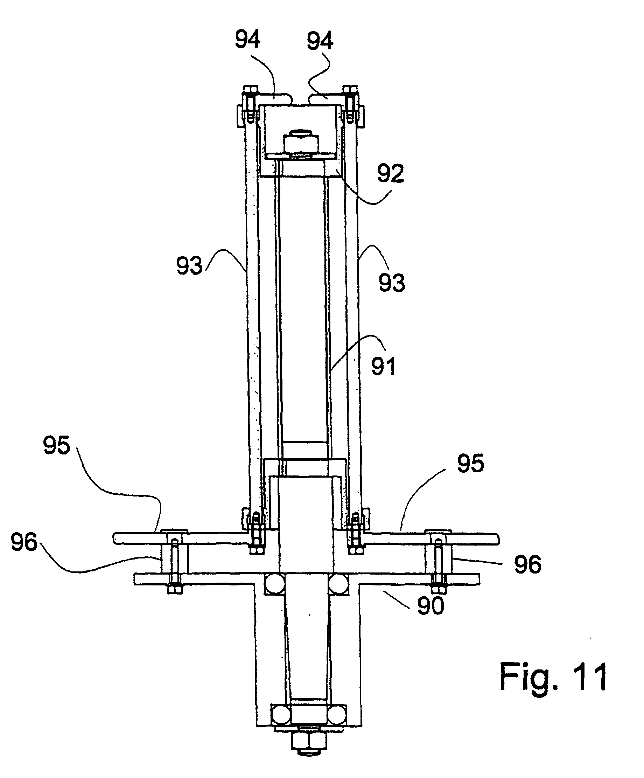

Referring now to Figures 9, 10 and 11, an alternative alignment chuck is illustrated which is especially suitable for use with the fingers rotating in a generally vertical plane so as to provide alignment of the objects in a third plane. The device comprises a fixed base 90 having rotatably mounted thereon a column 91 carrying a cup-shaped support member 92 at its free end. The support member 92 has mounted around and through its periphery six rotatable shafts 93, each of which carries a curved finger 94 fixed to its outward end, while the opposite end has a lever 95 fixed thereto. Each lever 95 extends outwardly from the column 91 and passes between a respective pair of posts 96 extending outwardly from the base 90 adjacent the periphery thereof. The pairs of posts 96 are spaced equally around the base. A hydraulic or pneumatic ram 97 is coupled to the support member 92 so as to be able to rotate it relative to the base 90. As may be seen by comparing Figure 10 with Figure 9, rotation of the support member 92 causes the levers 95 to turn relative to the support member, since the ends are constrained by the pairs of posts 96, with the result that the fingers 94 are rotated together relative to the support 92 between the closed position illustrated by Figure 9 and the open position illustrated by Figure 10.

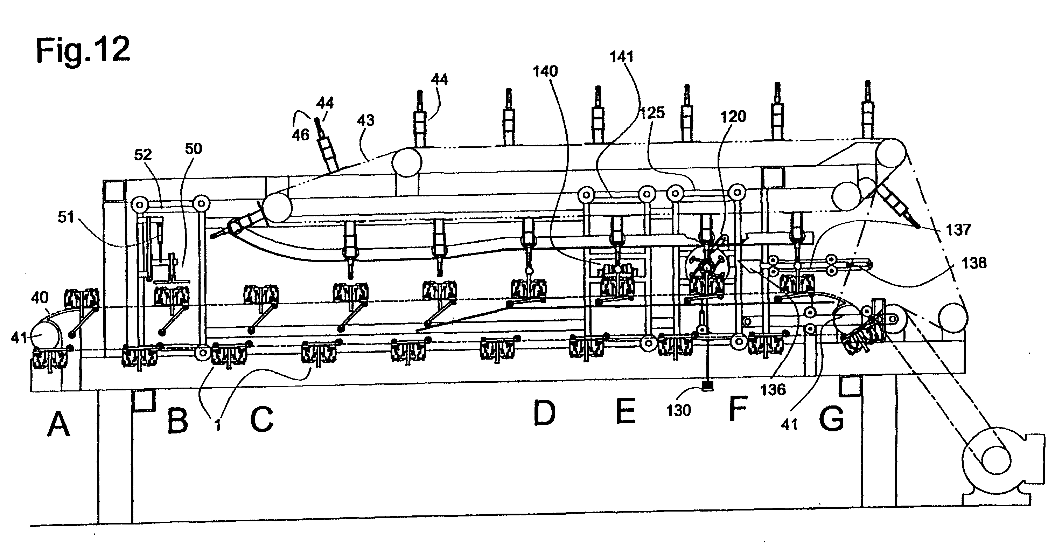

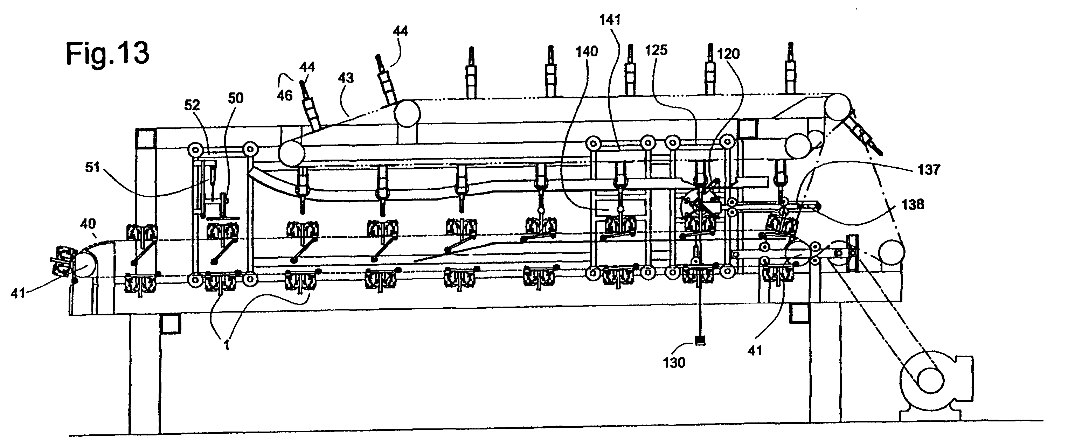

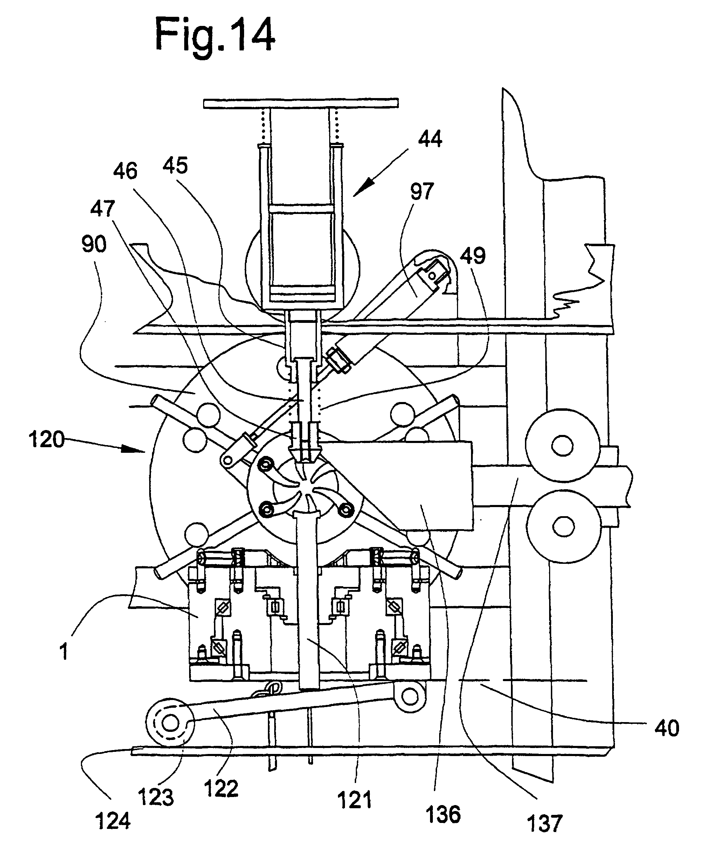

A machine for aligning onions is illustrated in Figures 12 and 13 in two sequential stages of operation. The machine comprises a first conveyor having an endless belt 40 passing around spaced apart rollers 41. The rollers are mounted in a suitable frame, and one of the rollers is driven, thereby moving the belt 40. Mounted on the conveyor 40 are seventeen alignment chucks 1, a secondary alignment means (not shown) and a pair of horizontally extending alignment chucks 120, as illustrated in Figures 9, 10 and 11. Above the conveyor 40 there is mounted a second conveyor comprising an endless belt 43 passing around spaced apart rollers 49. The endless belt 43 is provided with a plurality of retaining members 44 each comprising a piston 46 (Figure 14) slidably mounted in a cylinder 45 the lower end of the piston having a cup 47 attached thereto. A compression spring 49 and the weight of the piston 46 and cup 47 bias the piston downwardly towards a respective one of the alignment chucks 1. The purpose of the retaining members 44 is to exert a slight downward pressure on the onion carried in an alignment chuck to hold it in position during movement along the machine.

A loading tube (not shown) may be mounted at one end of the first conveyor belt, the tube being so located as to enable onions passing through the tube to land on the centre plate of an alignment chuck 1 passing under the tube. The tube is provided with means to selectively release an onion contained therein.

Figure 14 is an enlarged elevation of one of the horizontally extending chucks 120 on the machine shown in Figures 12 and 13, with the knife ready to trim the onion (not shown) carried on the alignment chuck 1. The chuck 1 on the conveyor 40 has a central supporting post 121 which is vertically slidable relative to the chuck with the free end of the post extending below the chuck to be engaged by a lever 122 which is hinged to the base of the chuck. The lever 122 carries at its free end a wheel 123 which runs on a cam surface 124 extending along a part of the machine as may be seen from Figures 12 and 13. The cam surface 124 serves to lift the post 121 and so lift aligned onion clear of the chuck for further alignment before trimming.

It will be seen from Figure 14 that the retaining member 44, being spring-biased downwardly, holds the onion firmly in contact with the post 121 as it is lifted.

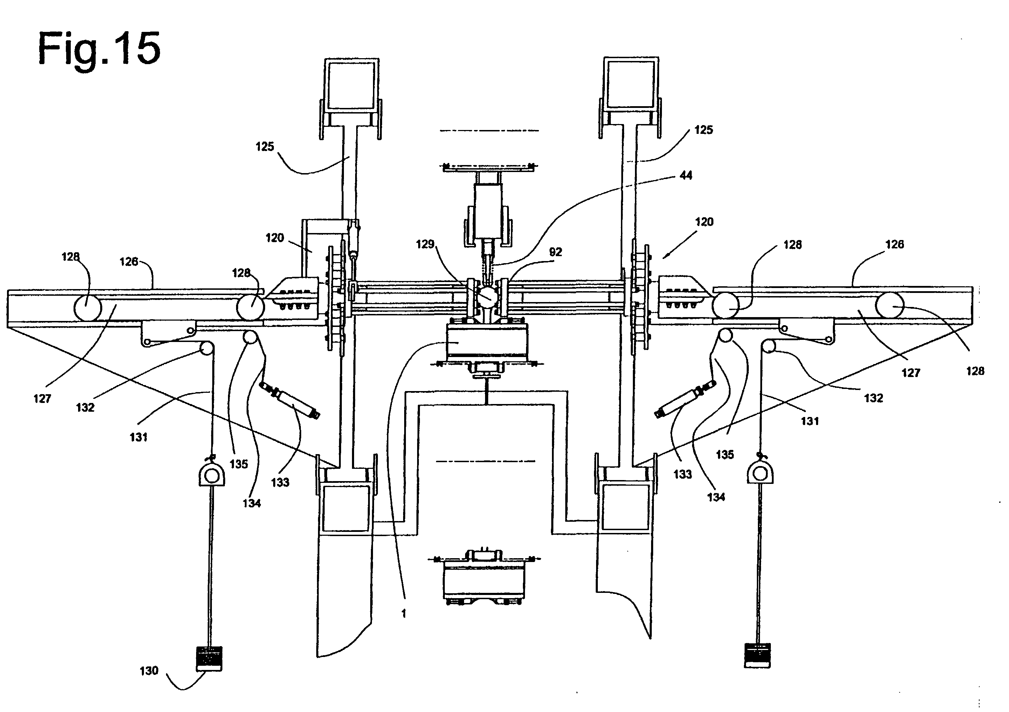

The horizontally extending alignment chuck 120 is mounted on a carriage 125 (Figs 12 and 13) which runs along rails on the main frame of the machine so as to be movable back and forth to synchronise with the forward movement of one of the chucks 1 over the last stage of the machine, as hereinafter described, and then to return rapidly to meet and follow the next chuck 1 as it arrives at the last stage. The two opposed horizontally extending chucks 120 are moved inwardly into engagement with the onion, as may be seen more clearly from Figure 15. Each carriage 125 has an outwardly extending track 126 mounting a secondary carriage 127 with rollers 128 to enable the carriage to roll in and out transversely of the direction of movement of the conveyor. Each secondary carriage 127 has the base 90 of the alignment chuck 120 mounted thereon so that the chuck can be moved towards and away from the onion 129 carried on the post 121 of the chuck 1. Two separate devices are mounted on the carriage 125 to move the secondary carriages 127 inwardly. The first is a hanging weight 130 connected to the carriage 127 by a cord 131 which passes over a pulley 132, to provide a steady inward biasing force, while the second is a retractable ram 133 connected to the carriage 127 by a second cord 134 passing over a second pulley 135, to provide more rapid inward movement to engage the onion when the chuck 1 comes into position alongside the chuck 120.

As the carriages 125 follow the movement of the conveyor over the last stage of the machine, the rams 97 are extended to move the fingers 94 inwardly. The fingers 94 follow the contours of the onion inwardly at each end, drawing the stem of the onion and the root into transverse alignment ready for trimming. When the onion is fully aligned, with the fingers 94 being in their closed positions, it arrives at the trimming station where knives 136 on each side (Figs 13 and 14 show this position) are ready to be operated to trim the ends off the onion. The knives 136 are mounted on slides 137 and are each provided a ram 138 which extends rapidly to drive the knife 136 rearwardly relative to the direction of movement of the onion through the machine, slicing each end off to leave the onion ready for final processing, for example to remove the skin, in another machine. The knife is then retracted ready for the arrival of the next onion.

The sequence of operation of the machine illustrated in Figure 9 will now be described:

As the conveyor belt moves from left to right so the alignment chucks 1 move to different positions. When the alignment chuck 1 reaches position A in Figure 12 the releasing means of the tube releases an onion which falls onto the centre plate of the chuck. The alignment chuck 1 now supporting an onion advances to position B where a flat rotatable disc 50 is pressed down on to the onion by a ram 51, the disc 50 being spring mounted so as to avoid excessive force on the onion. The disc 50 and ram 51 are mounted on a carriage 52 which is movable along the machine by a short distance to follow the movement of the conveyor while the fingers of the chuck 1 are moved inwardly to align the onion as hereinbefore described with reference to Figures 1 to 4. The carriage 52 then returns to its start position with the disc 50 raised clear of the onion, ready for the next onion.

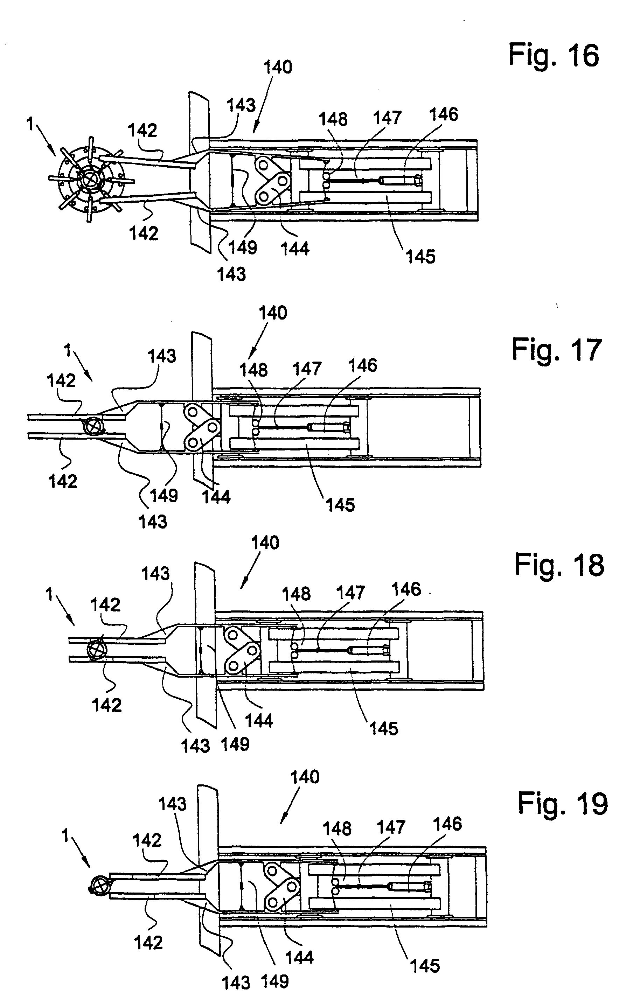

As the alignment chuck moves from position B towards position C it moves towards the second conveyor. The movement of the first and second conveyors is synchronised so that the vertical centre line of each retaining member 44 is substantially aligned with the vertical centre line of an alignment chuck 1. As the alignment chuck 1 reaches the position C the cup 47 of the retaining member 44 engages with the onion carried in the alignment chuck 1. Between the position C and D the wheel 123 on the lever 123 beneath the chuck 1 engages the cam surface 124, causing the post 121 to lift the onion clear of the chuck, ready for presentation to the secondary alignment device 140 at position E. The secondary alignment device 140 is mounted on a rolling carriage 141 so as to be able to move longitudinally to follow the movement of the conveyor 40. The construction and operation of the secondary alignment device 140 is described hereinafter in more detail with reference to Figures 16 to 22.

After the secondary alignment stage, the chuck 1 arrives at position F where the onion is acted on by the horizontally extending chuck 120 and the trimming knife, as hereinbefore described. At position G, the retaining member 44 lifts clear of the onion to allow it to be discharged, as the chuck 1 tips, for further processing, as may be seen from Figure 13 in particular.

Referring now to Figures 16 to 22, the alternative secondary alignment device 140 comprises a pair of probes 142 extending from support arms 143 mounted via links 144 on a carriage 145 whose transverse movement relative to the conveyor direction is controlled in a manner comparable with that of the carriage 127 hereinbefore described with reference to Figure 15. Rotation of the arms 143 is effected by means of a ram 146 via cords 147 and pulleys 148, while a tension spring 149 biases the probes 142 towards each other.

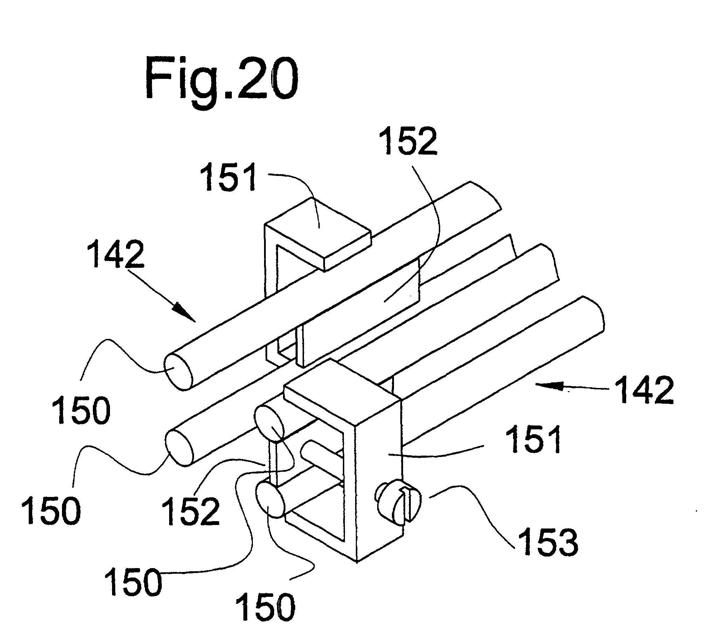

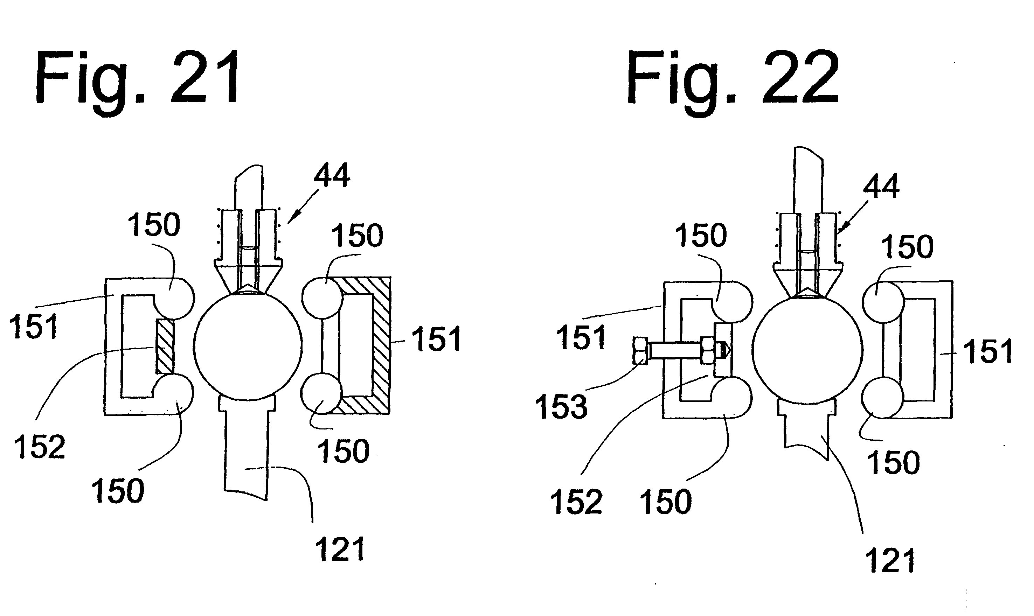

As may be seen more dearly from Figures 20 to 22, each probe 142 consists of a pair of spaced parallel rods 150, one above the other, linked together by a respective yoke 151, and having between them at a predetermined position therealong a bar 152 whose edge is used to engage a protrusion on the object to rotate it into position, as hereinafter described. The bar 152 may be fixed, as shown on the right-hand side of each of Figures 21 and 22, or it may be adjustable laterally by way of a mounting screw 153 extending through the yoke 151, as may be seen on the left-hand side of Figures 21 and 22, and on the right hand yoke in Figure 20. It will be seen that the bars 152 on the two probes 142 are staggered along their length. This is so that, particularly with objects such as onions and the like, having the remnants of the stalk at one end and the roots at the other, if the stalk or root end is not engaged by the first of the bars 152, the other bar can then engage the opposite end of the object.

The sequence of operation of the secondary alignment device will now be described with reference to Figures 16 to 19. As the first alignment means 1 carrying the onion arrives at the starting position of the secondary alignment means (position E in Figure 12), the carriage 145 is caused to slide inwardly with the probes 142 opened apart from each other. The probes extend in front and behind the onion, relative to the direction of movement of the conveyor, and come to rest extending laterally past the onion, as shown in Figure 17, at which point the ram 146 is extended to allow the probes 142 to close into contact with the onion, with the four rods 150 resting on the onion. The carriage 145 is then moved outwardly again, sliding the rods 150 over the onion until the first of the bars 152 encounters the root or stalk end, as shown in Figure 18. Continued movement of the rods 150 outwardly causes the bar 152 to rotate the root or stalk end pulling it into a generally transverse alignment, as shown in Figure 19, suitable for engagement by the third alignment means 120, as hereinbefore described.

## Claims

1. A device for positioning an object at least an end portion of which is generally bulbous with a longitudinal axis of the object passing therethrough, the device comprising a plurality of fingers each rotatably mounted on a respective pivot, the pivots being located on and spaced around a common circular or annular support so that the fingers are directed inwardly of the support, and means for rotating the fingers in synchrony between an open position wherein the circle defined by the ends of the fingers is of a maximum diameter and a closed position wherein said circle is of a minimum diameter, whereby during movement of the fingers between the open and closed position the fingers act on the bulbous portion of the object to align the axis into a desired plane.

2. A device according to Claim 1, wherein the fingers are mounted so as to be rotatable in a common plane.

3. A device according to Claim 2, wherein the fingers are mounted so as to be rotatable in a common plane.

4. A device according to Claim 1, 2 or 3, comprising a support member surrounded by the fingers such that an object supported by the support member can be aligned by the fingers.

5. A device according to Claim 4, wherein the support member is concave.

6. A device according to Claim 4 or 5, comprising a keeper arranged to hold the object against the support member.

7. A device according to Claim 6, wherein the keeper is movable towards and away from the support member.

8. A device according to any preceding claim, wherein the free end of each finger is chamfered.

9. A device according to any preceding claim, wherein at least the end of each finger is curved.

10. A device according to any preceding claim, comprising a drive member mounted coaxially of the common support, the drive member being annular or circular and rotatable relative to the common support to cause rotation of the fingers between the open and closed positions thereof.

11. A device according to Claim 10, wherein each finger extends outwardly beyond the pivot therefor, and the drive member is annular and surrounds the common support and carries means acting on the outward ends of the fingers to cause rotation thereof as the drive member is rotated around the common support.

12. A device according to Claim 10, wherein each finger is mounted on a respective shaft rotatable in the common support, each shaft extending to a position remove from the fingers and carrying on the remote end thereof a lever extending outwardly of the central axis of the device, and the drive member carries means acting on the levers to cause rotation thereof as the common support is rotated relative to the drive member.

13. A device according to Claim 12, wherein a ram is provided to rotate the common support relative to the drive member.

14. A machine comprising a plurality of the devices as defined in any of the preceding claims, the devices being mounted on a first conveyor to convey the objects carried by the devices relative to a second alignment means for aligning the longitudinal axis into a second desired plane.

15. A machine according to Claim 14, wherein the second alignment means comprises a pair of spaced apart levers, the levers being biased towards each other so as to contact the object on two opposite sides thereof as the object is moved between the levers.

16. A machine according to Claim 14, wherein the second alignment means comprises, for use with bulbous articles which have a projecting point such as a root or a stem, a pair of probes movable transversely of the direction of movement of the first alignment means to engage the object and having means on the probes for engaging the projecting point and rotating the object as the probes move so that the point of the object is directed generally transversely of the direction of movement of the first alignment means.

17. A machine according to Claim 16, wherein the second alignment means is mounted on a carriage movable parallel to the conveyor so as to keep pace, during operation thereof, with the object as it is carried by the first alignment means.

18. A machine according to Claim 4 or 5, comprising a plurality of retaining members movable by a second conveyor mounted above the first conveyor so that each retaining member maintains contact with an object on a respective one of the devices on the first conveyor as it moves through at least a part of the length of the first conveyor.

19. A machine according to any of Claims 14 to 18, also comprising at least one further device as defined in any of Claims 1 to 13 arranged with the fingers thereof rotatable in a plane or planes perpendicular to those on the first conveyor, the or each further device being movable alongside the first conveyor and synchronously therewith for at least a part of the length thereof and operable so as to align an object carried by a device on the first conveyor in a third plane.

20. A machine according to any of Claims 14 to 19, further comprising processing means for processing each said object.

21. A machine according to Claim 20, wherein the processing means comprises a knife for trimming the said object as it moves along the first conveyor.

## Patentansprüche

1. Vorrichtung zum Positionieren eines Gegenstandes, zumindest dessen Endteil im wesentlichen knollig ist, durch den eine Längsachse des Gegenstandes hindurch verläuft, wobei die Vorrichtung eine Vielzahl von Fingern umfaßt, von denen jeder um ein entsprechendes Drehgelenk drehbar montiert ist, wobei die Drehgelenke auf einem gemeinsamen kreis- oder ringförmigen Träger im Abstand angeordnet sind, so daß die Finger bezüglich des Trägers nach innen gerichtet sind, und Einrichtungen zum synchronen Drehen der Finger zwischen einer offenen Position, in welcher der von den Enden der Finger definierte Kreis einen maximalen Durchmesser besitzt, und einer geschlossenen Position, in der dieser Kreis einen minimalen Durchmesser aufweist, wodurch während einer Bewegung der Finger zwischen der offenen und der geschlossenen Position die Finger auf den knollenförmigen Teil des Gegenstandes so einwirken, daß sie die Achse in einer gewünschten Ebene ausrichten.

2. Vorrichtung nach Anspruch 1, bei der die Finger so montiert sind, daß sie in einer gemeinsamen Ebene drehbar sind.

3. Vorrichtung nach Anspruch 2, bei der die Finger so montiert sind, daß sie in einer gemeinsamen Ebene drehbar sind.

4. Vorrichtung nach Anspruch 1, 2, oder 3, die ein Tragelement umfaßt, das von den Fingern so umgeben ist, daß ein von dem Tragelement getragener Gegenstand durch die Finger ausgerichtet werden kann.

5. Vorrichtung nach Anspruch 4, bei der das Tragelement konkav ist.

6. Vorrichtung nach Anspruch 4 oder 5, die einen Halter umfaßt, der so angeordnet ist, daß er den Gegenstand am Tragelement hält.

7. Vorrichtung nach Anspruch 6, bei der der Halter zum Tragelement hin und von diesem weg bewegbar ist.

8. Vorrichtung nach einem der vorhergehenden Ansprüche, bei der das freie Ende eines jeden Fingers abgeschrägt ist.

9. Vorrichtung nach einem der vorhergehenden Ansprüche, bei der zumindest das Ende eines jeden Fingers gekrümmt ist.

10. Vorrichtung nach einem der vorhergehenden Ansprüche, die ein Antriebselement umfaßt, das koaxial zum gemeinsamen Träger montiert ist, wobei das Antriebselement ringförmig oder kreisförmig und bezüglich des gemeinsamen Trägers drehbar ist, um eine Drehung der Finger zwischen deren geöffneter und geschlossener Stellung zu bewirken.

11. Vorrichtung nach Anspruch 10, bei der sich jeder Finger über das zugehörige Drehgelenk hinaus nach außen erstreckt, bei der das Antriebselement ringförmig ist und den gemeinsamen Träger umgibt und Einrichtungen trägt, die auf die äußeren Enden der Finger einwirken, um eine Drehung der Finger zu bewirken, wenn das Antriebselement um den gemeinsamen Träger herum gedreht wird.

12. Vorrichtung nach Anspruch 10, bei der jeder Finger auf einer entsprechenden Welle in dem gemeinsamen Träger drehbar montiert ist, wobei sich jede Welle zu einer von den Fingem entfernten Stelle erstreckt und an ihrem entfernt liegenden Ende einen Hebel trägt, der sich von der zentralen Achse der Vorrichtung nach außen erstreckt und wobei das Antriebselement Einrichtungen trägt, die auf die Hebel einwirken, um deren Drehung zu bewirken, wenn der gemeinsame Träger relativ zum Antriebselement gedreht wird.

13. Vorrichtung nach Anspruch 12, bei der ein Kolben vorgesehen ist, um den gemeinsamen Träger relativ zum Antriebselement zu drehen.

14. Maschine, die eine Vielzahl von Vorrichtungen nach einem der vorhergehenden Ansprüche umfaßt, wobei die Vorrichtungen auf einem ersten Förderer montiert sind, um die von den Vorrichtungen getragenen Gegenstände relativ zu einer zweiten Ausrichtungseinrichtung zu fördern, um die Längsachse in eine zweite gewünschte Ebene auszurichten.

15. Maschine nach Anspruch 14, bei der die zweite Ausrichteinrichtung ein Paar von zueinander im Abstand angeordneten Hebeln umfaßt, wobei die Hebel aufeinander zu vorgespannt sind, so daß sie mit dem Gegenstand auf zwei gegenüberliegenden Seiten des Gegenstandes in Berührung treten, wenn der Gegenstand zwischen die Hebel bewegt wird.

16. Maschine nach Anspruch 14, bei der die zweite Ausrichteinrichtung zur Verwendung mit knolligen Gegenständen, die einen vorspringenden Punkt wie zum Beispiel eine Wurzel oder einen Stiel aufweisen, ein Paar Sonden umfaßt, die quer zur Bewegungsrichtung der ersten Ausrichteinrichtung bewegbar sind, um mit den Gegenstand in Eingriff zu treten, wobei an den Sonden Einrichtungen vorhanden sind, die dazu dienen, mit dem vorspringenden Punkt in Eingriff zu treten und den Gegenstand zu drehen, während sich die Sonden bewegen, so daß der vorspringende Punkt des Gegenstandes im wesentlichen quer zur Bewegungsrichtung der ersten Ausrichteinrichtung ausgerichtet wird.

17. Maschine nach Anspruch 16, bei der die zweite Ausrichteinrichtung auf einem Schlitten montiert ist, der parallel zum Förderer bewegbar ist, um während seines Betriebes mit dem Gegenstand Schritt zu halten, während dieser von der ersten Ausrichteinrichtung getragen wird.

18. Maschine nach Anspruch 4 oder 5, die eine Vielzahl von Rückhalteelementen umfaßt, die durch einen zweiten Förderer bewegbar sind, der oberhalb des ersten Förderers montiert ist, so daß jedes Rückhalteelement mit einem Gegenstand auf einer entsprechenden Vorrichtung auf dem ersten Förderer eine Berührung aufrechterhält, während sich der Gegenstand zumindest über einen Teil der Länge des ersten Förderers bewegt.

19. Maschine nach einem der Ansprüche 14 bis 18, die wenigstens eine weitere Vorrichtung gemäß einem der Ansprüche 1 bis 13 umfaßt, die so angeordnet ist, daß ihre Finger in einer Ebene oder Ebenen drehbar sind, die senkrecht zu denen auf dem ersten Förderer ist bzw. sind, wobei die oder jede weitere Vorrichtung längs des ersten Förderers und synchron mit diesem zumindest über einen Teil der Länge dieses ersten Förderers bewegbar und so betätigbar ist, daß sie den von einer Vorrichtung des ersten Förderers getragenen Gegenstand in einer dritten Ebene ausrichtet.

20. Maschine nach einem der Ansprüche 14 bis 19, die weiterhin Bearbeitungseinrichtungen zum Bearbeiten eines jeden Gegenstandes umfaßt

21. Maschine nach Anspruch 20, bei der die Bearbeitungseinrichtungen ein Messer zum Beschneiden des Gegenstandes umfassen, während sich dieser längs des ersten Förderers bewegt.

## Revendications

1. Dispositif pour positionner un objet dont au moins une partie d'extrémité a la forme générale d'un bulbe avec un axe longitudinal de l'objet la traversant, le dispositif comprenant une pluralité de doigts, chacun étant monté à rotation sur un pivot respectif, les pivots étant situés sur et espacés autour d'un support circulaire ou annulaire commun, de telle sorte que les doigts soient dirigés vers l'intérieur du support, et un moyen pour faire tourner les doigts en synchronisme entre une position ouverte dans laquelle le cercle défini par les extrémités des doigts est d'un diamètre maximal et une position fermée dans laquelle ledit cercle est d'un diamètre minimal, . ce par quoi, pendant le mouvement des doigts entre la position ouverte et la position fermée, les doigts agissent sur la partie en forme de bulbe de l'objet pour aligner l'axe dans un plan désiré.

2. Dispositif selon la revendication 1, dans lequel les doigts sont montés de façon à pouvoir être entraînés en rotation dans un plan commun.

3. Dispositif selon la revendication 2, dans lequel les doigts sont montés de façon à pouvoir être entraînés en rotation dans un plan commun.

4. Dispositif selon l'une des revendications 1, 2 ou 3, comprenant un élément de support entouré par les doigts, de telle sorte qu'un objet supporté par l'élément de support puisse être aligné par les doigts.

5. Dispositif selon la revendication 4, dans lequel l'élément de support est concave.

6. Dispositif selon l'une des revendications 4 ou 5, comprenant un organe de maintien disposé pour maintenir l'objet contre l'élément de support.

7. Dispositif selon la revendication 6, dans lequel l'organe de maintien est déplaçable vers et à l'opposé de l'élément de support..

8. Dispositif selon l'une quelconque des revendications précédentes, dans lequel l'extrémité libre de chaque doigt est chanfreinée.

9. Dispositif selon l'une quelconque des revendications précédentes, dans lequel au moins l'extrémité de chaque doigt est incurvée.

10. Dispositif selon l'une quelconque des revendications précédentes, comprenant un élément d'entraînement monté coaxialement au support commun, l'élément d'entraînement étant annulaire ou circulaire et pouvant tourner par rapport au support commun pour provoquer une rotation des doigts entre les positions ouverte et fermée de ceux-ci.

11. Dispositif selon la revendication 10, dans lequel chaque doigt s'étend vers l'extérieur au-delà du pivot de celui-ci, et l'élément d'entraînement est annulaire et entoure le support commun et porte un moyen agissant sur les extrémités externes des doigts pour provoquer la rotation de ceux-ci alors que l'élément d'entraînement est entraîné en rotation autour du support commun.

12. Dispositif selon la revendication 10, dans lequel chaque doigt est monté sur un arbre respectif susceptible de tourner dans le support commun, chaque arbre s'étendant jusqu'à une position éloignée des doigts et portant sur l'extrémité éloignée de celui-ci un levier s'étendant extérieurement à l'axe central du dispositif, et l'élément d'entraînement porte un moyen agissant sur les leviers pour provoquer la rotation de ceux-ci alors que le support commun est entraîné en rotation par rapport à l'élément d'entraînement.

13. Dispositif selon la revendication 12, dans lequel un vérin est prévu pour faire tourner le support commun par rapport à l'élément d'entraînement.

14. Machine comprenant une pluralité des dispositifs tels que définis à l'une quelconque des revendications précédentes, les dispositifs étant montés sur un premier transporteur pour transporter les objets portés par les dispositifs par rapport à un second moyen d'alignement pour aligner l'axe longitudinal dans un second plan désiré.

15. Machine selon la revendication 14, dans laquelle le second moyen d'alignement comprend une paire de leviers espacés l'un de l'autre, les leviers étant sollicités l'un vers l'autre de façon à venir en contact avec l'objet sur deux côtés opposés de celui-ci, alors que l'objet est déplacé entre les leviers.

16. Machine selon la revendication 14, dans laquelle le second moyen d'alignement comprend, pour une utilisation avec des articles en forme de bulbe qui ont un point de projection tel qu'une racine ou une tige, une paire de capteurs déplaçables transversalement à la direction de mouvement du premier moyen d'alignement pour engager l'objet et ayant un moyen sur les capteurs pour engager le point de projection et faire tourner l'objet alors que les capteurs se déplacent de telle sorte que le point de l'objet soit orienté généralement transversalement à la direction de mouvement du premier moyen d'alignement.

17. Machine selon la revendication 16, dans laquelle le second moyen d'alignement est monté sur un chariot déplaçable parallèlement au transporteur de façon à maintenir la cadence, pendant le fonctionnement de celui-ci, avec l'objet alors qu'il est transporté par le premier moyen d'alignement.

18. Machine selon l'une des revendications 4 ou 5, comprenant une pluralité d'éléments de retenue déplaçables par un second transporteur monté au-dessus du premier transporteur de telle sorte que chaque élément de retenue maintienne le contact avec un objet sur un dispositif respectif parmi les dispositifs sur le premier transporteur alors qu'il se déplace à travers au moins une partie de la longueur du premier transporteur.

19. Machine selon l'une quelconque des revendications 14 à 18, comprenant également au moins un autre dispositif tel que défini à l'une quelconque des revendications 1 à 13, disposé avec les doigts de celui-ci aptes à tourner dans un plan ou des plans perpendiculaires à ceux sur le premier transporteur, le dispositif ou chaque autre dispositif étant déplaçable le long du premier transporteur et en synchronisme avec lui sur au moins une partie de la longueur de celui-ci et actionnable de façon à aligner un objet transporté par un dispositif sur le premier transporteur dans un troisième plan.

20. Machine selon l'une quelconque des revendications 14 à 19, comprenant en outre un moyen de traitement pour traiter chaque objet précité.

21. Machine selon la revendication 20, dans laquelle le moyen de traitement comprend un couteau pour couper ledit objet alors qu'il se déplace le long du premier transporteur.
